(19) Europäisches Patentamt / European Patent Office / Office européen des brevets

(11) **EP 2 755 115 A1**

(12) **EUROPEAN PATENT APPLICATION**
published in accordance with Art. 153(4) EPC

(43) Date of publication:
**16.07.2014 Bulletin 2014/29**

(51) Int Cl.:
***G06F 3/033*** *(2013.01)*   ***G06F 3/01*** *(2006.01)*

(21) Application number: **12830488.8**

(86) International application number:
**PCT/JP2012/071456**

(22) Date of filing: **24.08.2012**

(87) International publication number:
**WO 2013/035554 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2011 JP 2011194938**

(71) Applicant: **Nitto Denko Corporation**
**Osaka 567-8680 (JP)**

(72) Inventor: **JUNI Noriyuki**
**Ibaraki-shi**
**Osaka 567-8680 (JP)**

(74) Representative: **HOFFMANN EITLE**
**Patent- und Rechtsanwälte**
**Arabellastrasse 4**
**81925 München (DE)**

(54) **METHOD FOR DETECTING MOTION OF INPUT BODY AND INPUT DEVICE USING SAME**

(57)    An input device according to the present invention includes: a light source L; an optical imaging means (camera C) disposed on the same side of a hand H as the light source L; a control means; a shape recognition means for calculating coordinates G of the center of gravity of the distribution of the shape of a fist and the coordinates T of the tip of a finger from a two-dimensional image acquired by the camera C; and a motion determination means for comparing distances (d) between the center of gravity coordinates G of the fist and the fingertip coordinates T. When there is a decrease or an increase between the distances (d) between the center of gravity coordinates G of the fist and the fingertip coordinates T before and after measurement, a determination is made that the motion of the hand H at that time is an upward or downward motion (motion in a Z direction) of the finger with respect to a virtual imaging plane P of the camera C. This provides a method for detecting motion of an input body, the method being capable of detecting the three-dimensional motion of a human hand from image analysis by using the single optical imaging means, and the input device for instruction manipulation using the method for detecting the motion.

## FIG.1A

**(Cont. next page)**

## FIG.1B

## FIG.1C

**Description**

Technical Field

The present invention relates to a method for detecting the motion of a hand used for input of coordinates in an input device, and the input device using the same.

Background Art

An input device which uses a human hand, a human finger and the like as an input body for manipulation has been developed as a user interface for a device capable of interaction with a two-dimensional video picture or a three-dimensional video picture which is displayed. This input device includes a three-dimensional position measurement system having a plurality of optical imaging means such as cameras. Based on images (two-dimensional images) obtained from the cameras whose shooting position and shooting angle are determined, this input device calculates the three-dimensional position, the coordinates on three axes (X, Y and Z axes) and the like of an object (input body) of interest by computation to output the coordinate values thereof to a control means (such as a computer) of a display device and the like (with reference to Patent Literatures 1 and 2, for example).

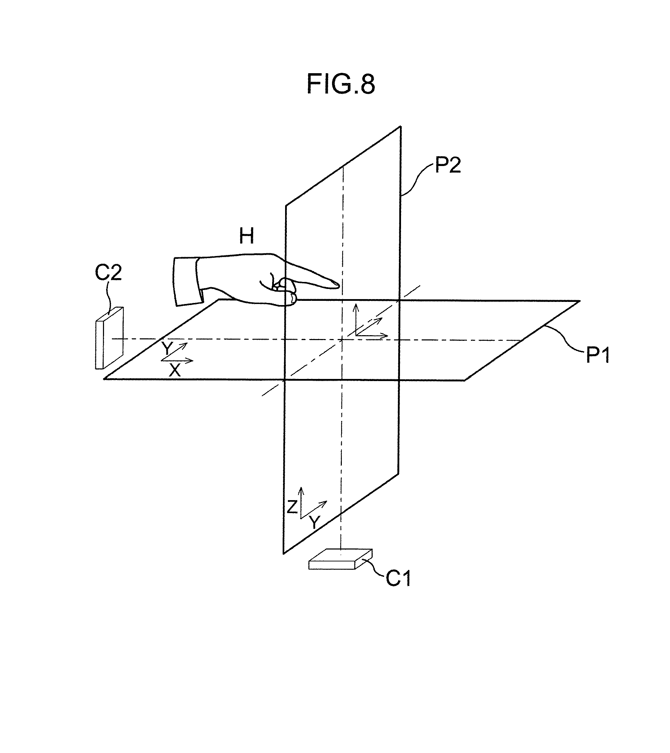

For example, an input device for detecting the coordinates of an input body (hand H) in the directions of three axes (X, Y and Z axes) orthogonal to each other as shown in Fig. 8 includes two cameras, i.e. a camera C1 which shoots the aforementioned input body from below (in the Z-axis direction) and a camera C2 which shoots the input body in a direction (from the left as seen in the figure or in the X-axis direction) orthogonal to the shooting direction of the aforementioned camera C1, as optical imaging means for shooting the input body. The input device projects light from a light source (not shown) toward the input body (hand H) to acquire reflected light (images) from the input body (hand H) in the form of a two-dimensional image (a virtual imaging plane P1; in the X and Y directions) corresponding to the aforementioned camera C1 below and a two-dimensional image (a virtual imaging plane P2; in the Y and Z directions) corresponding to the aforementioned camera C2 on the left-hand. Based on the acquired images, the input device recognizes and extracts the shape of a fingertip and the like of the hand H by computation using a computer and the like to synthesize data by using a parameter (a coordinate value in the Y-axis direction in this example) common to the images, thereby sensing and outputting the coordinates of the aforementioned hand H in the directions of the three axes (X, Y and Z axes) . By repeating the aforementioned steps of acquiring the images, recognizing the shape and synthesizing the coordinates, the input device is capable of sensing and outputting a three-dimensional motion (coordinates and a locus) of the aforementioned hand H.

CITATION LIST

Patent Literature

PTL 1: Japanese Published Patent Application No. HEI09-53914A

PTL 2: Japanese Published Patent Application No. HEI11-23262A

SUMMARY OF INVENTION

However, the three-dimensional position measurement system for use in the aforementioned conventional input device necessarily involves the need for a plurality of cameras, which results in large-scale and costly facilities in many cases. In addition, the cameras are not always disposed in positions optimum for shooting, depending on the ambient environment and the device structure thereof, but are disposed in positions which give a feeling of strangeness to an operator. Further, when the cameras come into a field of view recognizable by the operator, there is apprehension that the motion of a hand of the person unskilled in manipulation is unnatural or is not smooth.

In view of the foregoing, it is therefore an obj ect of the present invention to provide a method for detecting the motion of an input body, the method being capable of detecting the three-dimensional motion of a human hand from image analysis using a single optical imaging means, and an input device for instruction manipulation using the method for detecting the motion.

To accomplish the aforementioned object, a first aspect of the present invention is intended for a method for detecting the three-dimensional motion of a hand used for input of coordinates in an input device by means of a single optical imaging means. The method comprises the steps of: projecting light from a light source disposed above or below a hand including a fist toward the hand; disposing an optical imaging means on the same side of the hand as the light source to acquire the reflection of the light from the hand as a two-dimensional image on a virtual imaging plane; allocating coordinates on two axes orthogonal to each other to the two-dimensional image to recognize and extract the shape of the fist and the position of a fingertip protruding from the fist from the two-dimensional image, thereafter calculating the coordinates of the center of gravity of the area distribution of the fist and the coordinates of the fingertip by computation; and repeating the step of projecting the light, the step of acquiring the two-dimensional image and the step of calculating the center of gravity coordinates of the fist and the fingertip coordinates to compare distances between the center of gravity coordinates of the fist and the fingertip coordinates before and after the repetition, thereby making a determination that the hand including the fist has made a sliding movement along the virtual imaging plane when there is no change between the distances between the center of gravity coordinates of the fist and the fingertip coordinates before and after the repetition, and a determination that the fingertip has pivoted upwardly or downwardly about the wrist of the hand or an elbow when there is a change between the distance between the center of gravity coordinates of the fist and the fingertip coordinates before and after the repetition.

To accomplish the same object, a second aspect of the present invention is intended for an input device which comprises: a light source disposed above or below a hand including a fist used as an input body for the device; an optical imaging means disposed on the same side of the hand as the light source; a control means for controlling the light source and the optical imaging means; a shape recognition means for acquiring the reflection of light projected from the light source toward the hand as a two-dimensional image to calculate coordinates corresponding to the center of gravity of the area distribution of the fist and coordinates corresponding to the position of a fingertip protruding from the fist from the two-dimensional image; and a motion determination means for comparing distances between the center of gravity coordinates of the fist and the fingertip coordinates before and after a predetermined time interval to make a determination that the motion of the hand is an upward or downward motion of a finger with respect to a virtual imaging plane of the optical imaging means when there is a decrease or an increase between the distances before and after the time interval.

The present inventor has diligently made studies to solve the aforementioned problem, and has verified the motion (image) of a hand when it is shot with a single camera in detail. The present inventor has found that there is a difference in the way of motion between a fingertip portion and a fist (palm) portion of the hand, and has focused attention on this fact to make further studies. As a result, the present inventor has found that the motion of the fingertip including a vertical direction component (i.e. "upward or downward motion") with respect to an imaging plane of the camera is detected by tracking the motion of the coordinates of the fingertip which moves greatly when the hand is inclined with respect to the center of gravity coordinates (the center of gravity point of the dot distribution on an image or a substantially fixed point close to the pivot axis of a wrist) of the fist which moves a little even when the hand is inclined. Hence, the present inventor has attained the present invention.

The present invention has made based on the aforementioned findings. The method for detecting the motion of an input body according to the present invention includes the steps of: projecting light toward a hand including a fist; acquiring the reflection of the light from the hand as a two-dimensional image by means of a single optical imaging means; recognizing the coordinates of the center of gravity of the area distribution of the fist and the coordinates of a fingertip in this image; repeating the aforementioned steps to compare distances between the center of gravity coordinates of the fist and the fingertip coordinates before and after the repetition, thereby determining the motions of the fingertip and the fist from the result of comparison. Thus, the method for detecting the motion of an input body according to the present invention makes a determination that the whole hand including the fist has made a sliding movement along an imaging plane (virtual plane) of the optical imaging means when there is no change between the distances between the center of gravity coordinates of the fist and the fingertip coordinates before and after the repetition, and makes a determination that the fingertip has pivoted upwardly or downwardly with respect to the imaging plane about the wrist of the hand or an elbow when there is a change between the distances between the center of gravity coordinates of the fist and the fingertip coordinates before and after the repetition. Therefore, the method for detecting the motion of an input body according to the present invention is capable of detecting the three-dimensional motion of a human hand from image analysis by using only the single optical imaging means.

The input device according to the present invention includes: a light source; an optical imaging means disposed on the same side as the light source; a control means; a shape recognition means for calculating the coordinates of the center of gravity of the shape distribution of the fist and the coordinates of the tip of a finger from a two-dimensional image acquired by the optical imaging means; and a motion determination means for comparing distances between the center of gravity coordinates of the fist and the fingertip coordinates before and after a predetermined time interval. Thus, when there is a decrease or an increase between the distances between the center of gravity coordinates of the fist and the fingertip coordinates before and after the time interval, a determination is made that the motion of the hand is an upward or downward motion (vertical motion with respect to the optical imaging means) of the finger with respect to a virtual imaging plane of the optical imaging means. Therefore, the input device according to the present invention is capable of detecting the three-dimensional motion of a human hand from image analysis by using the single optical imaging means provided in the input device.

Additionally, the input device according to the present invention requires only the single optical imaging means as described above. Thus, the input device for detecting the three-dimensional motion is provided with simple facilities at low costs. Further, the flexibility of the placement of the aforementioned optical imaging means (camera or the like) is improved, so that the camera or the like may be disposed (hidden) in a position of which an operator is unconscious. Therefore, the input device according to the present invention is an intuitive user-friendly device on which even a beginner of manipulation performs an input operation easily.

BRIEF DESCRIPTION OF DRAWINGS

FIGs . 1A to 1C are views illustrating a method for detecting the coordinates of a hand in an input device according to an embodiment of the present invention.
FIG. 2 is a view showing a first pattern of the motion of the hand in the input device according to the present invention.
FIGs. 3A and 3B are views illustrating a method for detecting the motion of the hand (in X and Y directions) in the input device according to the embodiment of the present invention.
FIG. 4 is a view showing a second pattern of the motion of the hand in the input device according to the present invention.
FIGs. 5A and 5B are views illustrating a method for detecting the motion of the hand (in a Z direction) in the input device according to the embodiment of the present invention.
FIG. 6 is a view showing another example of placement of a camera unit in the input device according to the present invention.
FIG. 7 is a view showing still another example of placement of the camera unit in the input device according to the present invention.
FIG. 8 is view illustrating a three-dimensional position measurement system in a conventional input device.

DESCRIPTION OF EMBODIMENTS

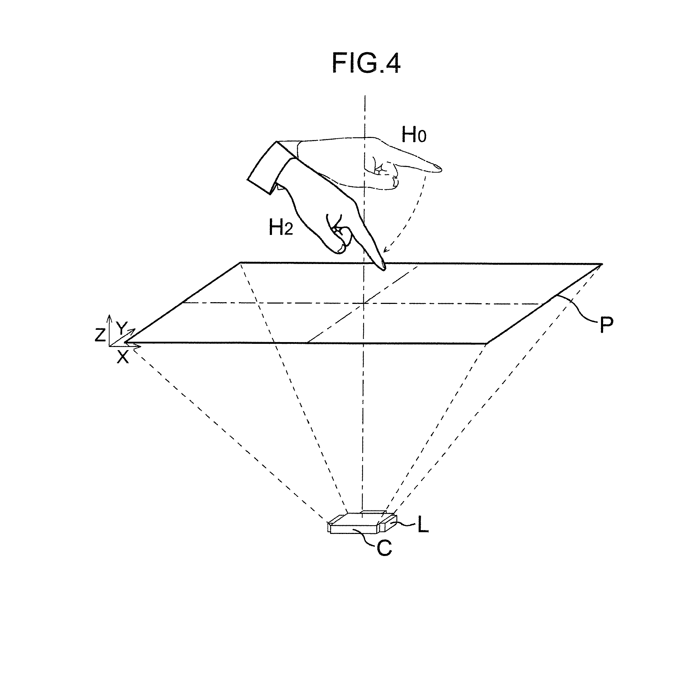

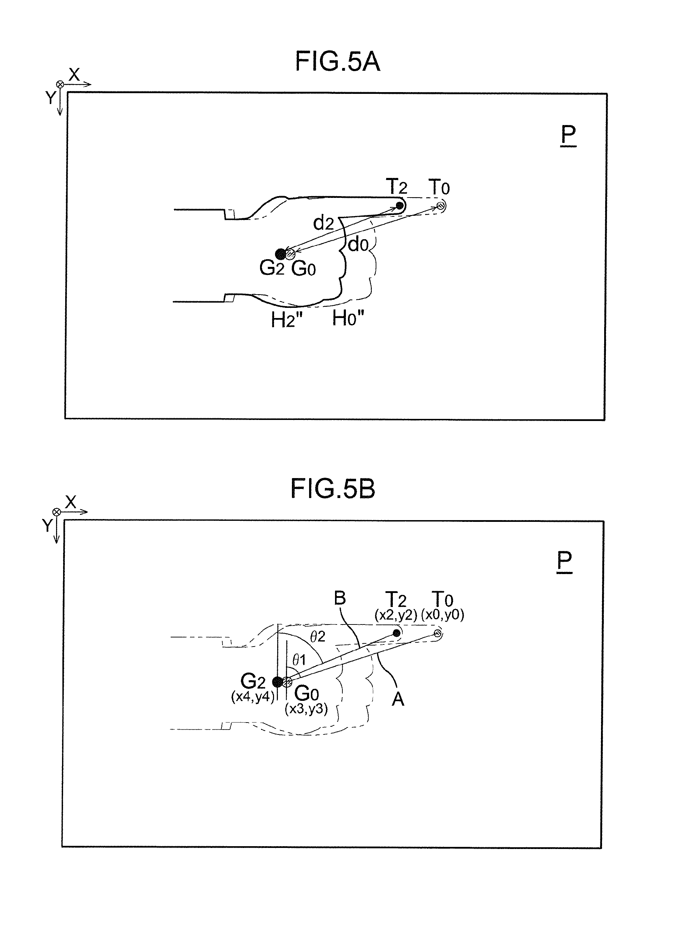

Next, an embodiment according to the present invention will now be described in detail with reference to the drawings. It should be noted that the present invention is not limited to the embodiment.

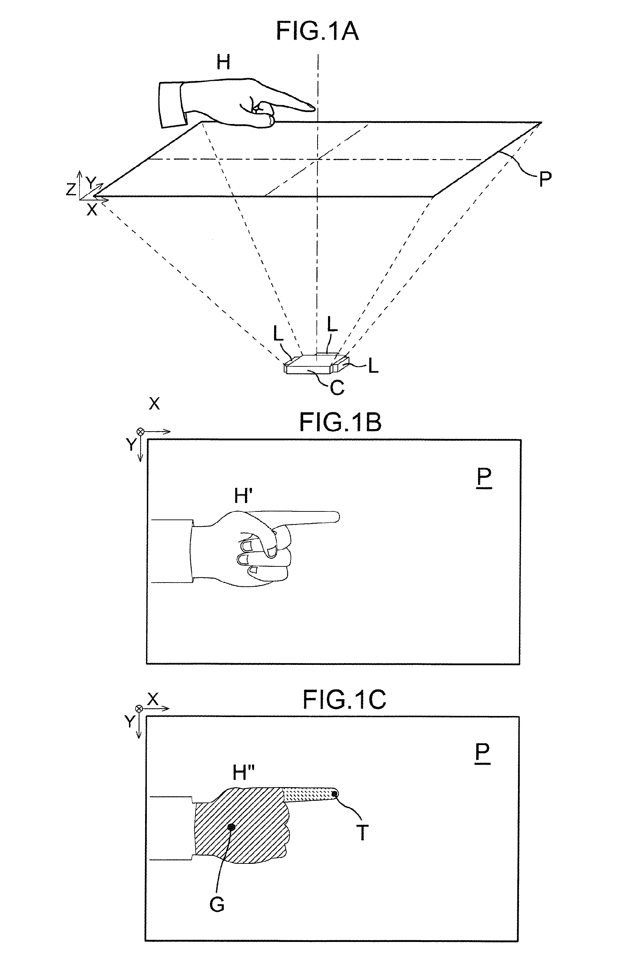

FIG. 1A is a view illustrating a method for detecting the coordinates of a hand H in an input device according to the embodiment of the present invention. FIG. 1B is a schematic view of a two-dimensional (virtual imaging plane P) image H' shot with an optical imaging means (camera C) in the aforementioned input device. FIG. 1C is a schematic view of an image H" obtained by binarizing the two-dimensional image H' of the aforementioned hand H. In subsequent figures including FIG. 1, a computer having the functions of a control means for controlling the camera C and light sources L, a shape recognition means, a motion determination means and the like, and connected to the aforementioned camera C is not shown.
The input device according to the present embodiment is provided for detecting the three-dimensional motion of the hand H including a fist used as an input body for the device by means of the single optical imaging means (camera C). The input device includes a camera unit disposed below (substantially vertically under) the aforementioned hand H, as shown in FIG. 1A, the camera unit being composed of the camera C having an image sensor, and the plurality of light sources L disposed around this camera C.
In this input device, the shape recognition means (not shown) acquires the reflection (image) of light projected from the aforementioned light sources L toward the hand H as the two-dimensional image H' on the virtual imaging plane P having coordinate axes extending in X and Y directions, as shown in FIG. 1B, and thereafter binarizes the acquired two-dimensional image H', based on a threshold value, as shown in FIG. 1C. The shape recognition means identifies the shape (shaded with solid diagonal lines in the figure) of the fist of the aforementioned hand H in the binary image H" to calculate and specify coordinates (center of gravity coordinates G) corresponding to the center of gravity of the area distribution of this fist. Also, the shape recognition means identifies a finger (shaded with dotted diagonal lines in the figure) protruding from the fist in the aforementioned binary image H" to calculate and specify coordinates (fingertip coordinates T) corresponding to the tip position of the finger.
Further, the aforementioned input device repeats the projection of light from the aforementioned light sources L, the acquisition of the two-dimensional image H' by means of the camera C and the calculation of the center of gravity coordinates G of the fist and the fingertip coordinates T based on the two-dimensional image. In addition, when a distance between the center of gravity coordinates G of the fist and the fingertip coordinates T is changed before and after the aforementioned repetition (with reference to FIG. 4 and FIG. 5A), the motion determination means (not shown) in the input device determines that the motion of the hand H at that time is an upward or downward motion (motion in a Z direction) with respect to the virtual imaging plane P of the aforementioned camera C. This is a characteristic of the input device according to the present invention.

The aforementioned input device and the detection method for use in the detection of the motion of the input body (hand H) will be described in further detail. The camera unit disposed below the aforementioned hand H includes the camera C, and the plurality of (in this example, three) light sources L disposed around this camera C, as shown in FIG. 1A. An image sensor such as a CMOS or CCD image sensor may be used as the aforementioned camera C. Examples of the optical imaging means for use in the input device according to the present invention include various optical sensors including photoelectric conversion element such as a photodiode, a phototransistor, a photo IC and a photo reflector, in addition to the camera C including the aforementioned CMOS image sensor or the CCD image sensor. Specific examples thereof include one-dimensional and two-dimensional PSDs (Position Sensitive Detectors), a pyroelectric infrared sensor, a CdS sensor, and the like.

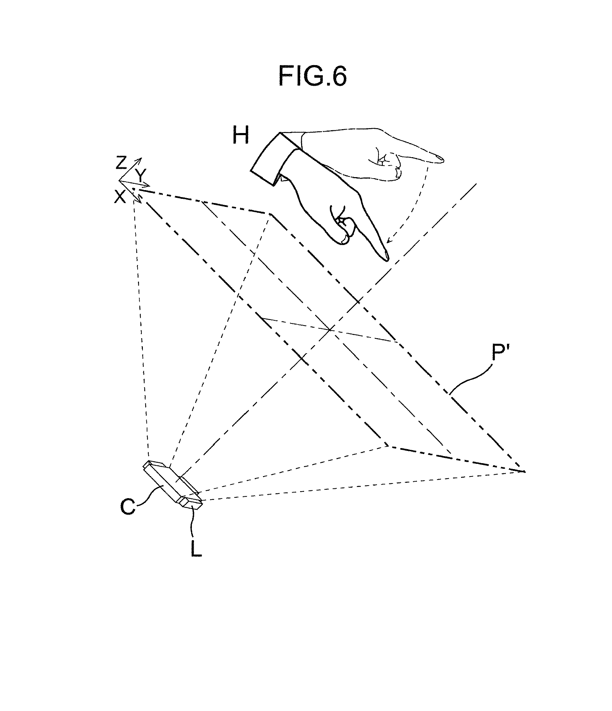

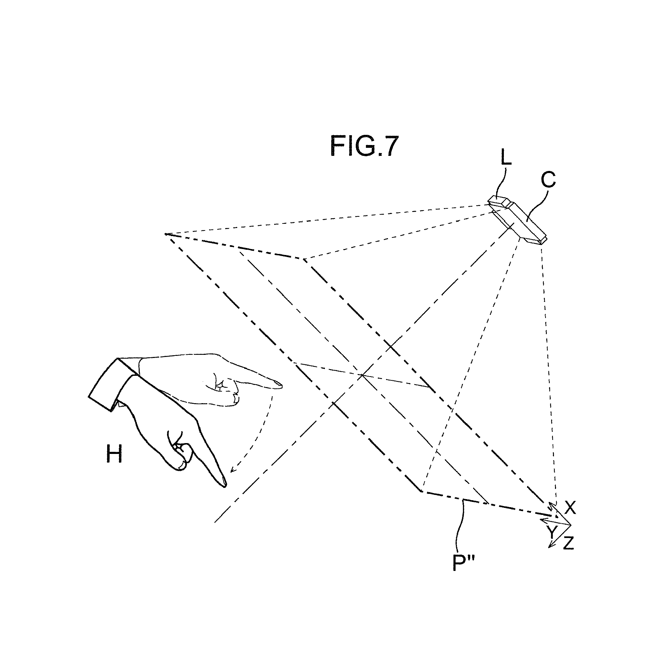

Examples of the aforementioned light sources L include illuminators such as infrared LEDs, and lamps. It is desirable that the aforementioned light sources L used herein are illuminators which emit light having a range other than that of visible light so as not to hinder the field of vision of an operator who performs an input operation. The aforementioned camera unit may be disposed in an inclined attitude with respect to the hand H below the input body (hand H) (with reference to FIG. 6) or may be disposed above the aforementioned hand H (with reference to FIG. 7).

The method for detecting the motion of the hand H inserted into a sensing region of the aforementioned input device will be described in a step-by-step manner.

For the detection of the motion of the aforementioned hand H, light is initially projected from the light sources L disposed below (or above) the hand H including the fist toward the hand H, as shown in FIG. 1A. This projection of light may be intermittent light emission (light projecting step). Next, with light projected, this hand H is shot with the camera C disposed on the same side of (in this example, below) the aforementioned hand H as the light sources L, and the reflection of the aforementioned light (reflected light or reflected image) from the hand H is acquired as the two-dimensional image H' (an image corresponding to the virtual imaging plane P) having the coordinate axes extending in the X and Y directions orthogonal to each other, as shown in FIG. 1B (imaging step).

Next, the aforementioned acquired two-dimensional image H' is binarized, based on the threshold value. Thereafter, as shown in FIG. 1C, the shape (shaded with solid diagonal lines in the figure) of the fist of the aforementioned hand H is identified in the binary image H". The coordinates (center of gravity coordinates G) corresponding to the center of gravity of the area distribution of this fist are calculated by computation. Similarly, the finger (shaded with dotted diagonal lines in the figure) protruding from the fist is identified in the aforementioned binary image H". The coordinates (fingertip coordinates T) corresponding to the tip position of the finger are calculated by computation. Then, the center of gravity coordinates G of the fist and the fingertip coordinates T are stored in a storage means of the control means (computer) and the like (coordinate specifying step).

Thereafter, the step (light projecting step) of projecting the aforementioned light, the step (imaging step) of acquiring the two-dimensional image and the step (coordinate specifying step) of calculating the center of gravity coordinates G of the fist and the fingertip coordinates T are repeated at determined time intervals. The center of gravity coordinates G of the fist and the fingertip coordinates T after the repetition are measured again (measuring step).

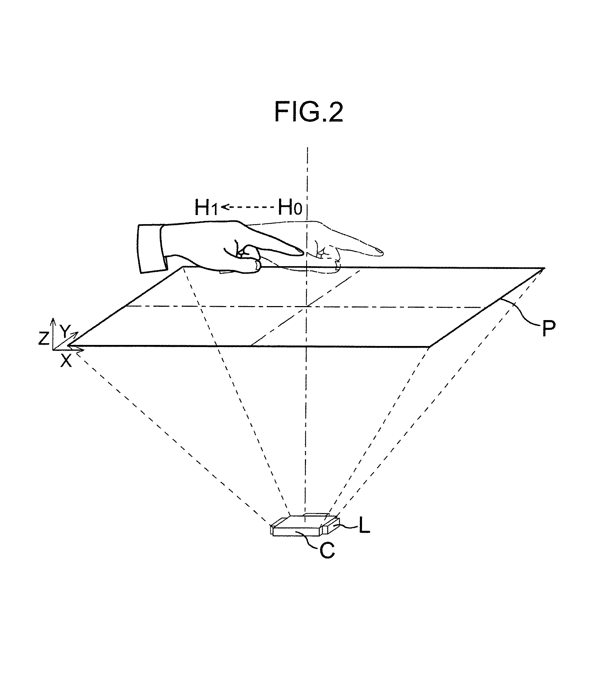

Then, a change in distance between the center of gravity coordinates G of the aforementioned fist and the fingertip coordinates T is calculated using the values of the center of gravity coordinates $G(X_m, Y_n)$ of the fist and the fingertip coordinates $T(X_p, Y_q)$ before and after the lapse of the aforementioned repetition. From the result of calculation, a determination is made as to which one of the two patterns to be described later the motion of the aforementioned hand H has, i.e. whether the motion of the aforementioned hand H has a first pattern (with reference to FIG. 2) in which the hand H has slid horizontally or a second pattern (with reference to Fig. 4) in which the hand H has swung upwardly or downwardly. The direction of movement (in the X, Y and Z directions) and the amount of movement of the aforementioned fingertip coordinates T are outputted through the control means and the like to the outside such as a display device (determining step).

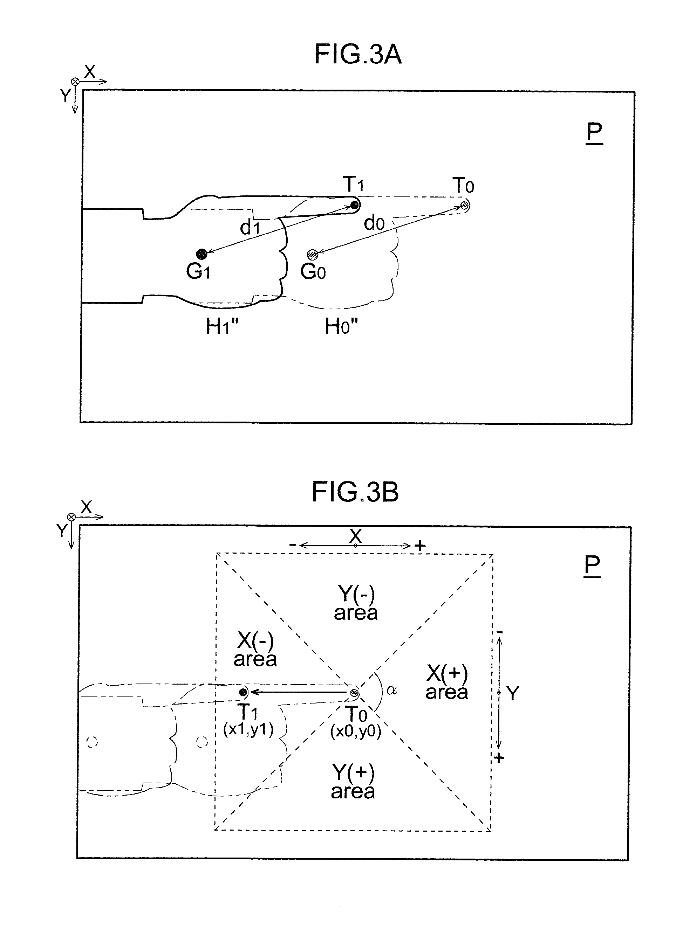

An instance where the hand (input body) has made a horizontally sliding movement ($H_0 \rightarrow H_1$) as shown in FIG. 2 is described in the form of the first pattern of determining the motion of the aforementioned hand H. When the hand $H_0$ has slid to the position of the hand $H_1$ in this manner, the center of gravity coordinates G of the fist and the fingertip coordinates T which are mentioned above move as represented by the binary image of FIG. 3A. Specifically, the center of gravity coordinates G of the fist move from an initial position (coordinates $G_0$) before the movement which is indicated by dash-double-dot lines in the figure to a position (coordinates $G_1$) after the movement which is indicated by solid lines, and the aforementioned fingertip coordinates T move from an initial position (coordinates $T_0$) before the movement to a position (coordinates $T_1$) after the movement which is indicated by solid lines in parallel to the center of gravity coordinates G of the aforementioned fist. At this time, a distance do between the center of gravity coordinates Go of the fist of the hand $H_0$ and the fingertip coordinates To before the movement, and a distance $d_1$ between the center of gravity coordinates $G_1$ of the fist of the hand $H_1$ and the fingertip coordinates $T_1$ after the movement are calculated by the repetition of the aforementioned measuring step. In the aforementioned determining step, the aforementioned distance do between the coordinates Go and the coordinates To before the movement and the distance $d_1$ between the

coordinates $G_1$ and the coordinates $T_1$ after the movement are compared with each other. When there is no difference (no change) between the distance do and the distance $d_1$, the motion determination means of this input device makes a determination that the hand H has made a horizontally sliding movement as shown in FIG. 2, to thereby output the X and Y coordinate values of the fingertip coordinates $T_1$ after the movement or the direction and distance (between the coordinates To and the coordinates $T_1$) of movement of the fingertip coordinates T in the form of data about the input body to the outside.

For the determination of the motion of the aforementioned hand H, an identification region in which the motion $(T_0 \rightarrow T_1)$ of the aforementioned fingertip coordinates T is allocated on an area-by-area basis to four directions [X(+), X(-), Y(+) and Y(-)] may be defined on the virtual imaging plane P having the coordinate axes extending in the X and Y directions, as shown in FIG. 3B. With such a configuration, the aforementioned input device is capable of functioning as a pointing device which outputs signals of the four directions (positive and negative directions of X and Y) resulting from the movement of the fingertip coordinates T in corresponding relation to the motion of the aforementioned hand H in a simplified manner, such as a mouse device and a tablet device in a computer and the like, at the same time as the determination of the motion of the hand H in the aforementioned determining step . It should be noted that the setting angle $\alpha$, shape and arrangement of the areas in the aforementioned identification region may be set in accordance with devices that outputs the aforementioned signals, applications and the like.

Next, in an instance where the hand (input body) has made an upward or downward motion $(H_0 \rightarrow H_2)$ as shown in FIG. 4 in the form of the second pattern of determining the motion of the hand H in the aforementioned determining step, the center of gravity coordinates G of the aforementioned fist and the fingertip coordinates T move as represented by the binary image of FIG. 5A. Specifically, the motion of the aforementioned hand H in the aforementioned instance is a pivotal movement about a wrist, an elbow and the like. Thus, the center of gravity coordinates G of the fist move little from the initial position (coordinates $G_0$) before the movement which is indicated by dash-double-dot lines in the figure, and remain in a nearby position (coordinates $G_2$) which is indicated by solid lines. The fingertip coordinates T, on the other hand, move from the initial position (coordinates $T_0$) before the movement to a relatively remote position (coordinates $T_2$) after the movement which is indicated by solid lines so as to approach the position of the center of gravity coordinates G of the fist, even in the case of the aforementioned pivotal movement about a wrist, an elbow and the like. At this time, the distance do between the center of gravity coordinates Go of the fist of the hand $H_0$ and the fingertip coordinates To before the movement, and a distance $d_2$ between the center of gravity coordinates $G_2$ of the fist of the hand $H_2$ and the fingertip coordinates $T_2$ after the movement are calculated by the repetition of the aforementioned measuring step, as in the case of the aforementioned pattern of the sliding movement. In the aforementioned determining step, the aforementioned distance do before the movement and the distance $d_2$ after the movement are compared with each other. The result of the comparison shows that the distance $d_2$ after the movement is shorter ($d_2 <$ do). Thus, the aforementioned input device and the motion determination means thereof make a determination that the aforementioned hand H has swung upwardly or downwardly (in the Z direction) as shown in FIG. 4, to thereby output the signal in the form of data about the input body to the outside.

The method for detecting the upward or downward motion of the aforementioned hand H in the Z-axis direction, i.e. the motion of the aforementioned fingertip coordinates T approaching the center of gravity coordinates G in the binary image (a procedure of image processing) will be described in further detail. First, infrared radiation is projected from the light sources L (infrared LEDs) disposed below the hand H including the fist as mentioned above. The reflection (two-dimensional image) from the hand H is shot with the camera C disposed similarly below the hand H. The coordinate axes extending in the X and Y directions are allocated to this two-dimensional image. Next, the shape recognition means (program) optimally sets the threshold value of brightness for binarization, and performs a binarization process on the aforementioned two-dimensional image. Then, the shape recognition means (program) performs a thinning process to sharpen the outside shape of the hand H, as shown in FIG. 5A.

Next, by using the aforementioned sharpened two-dimensional image, the shape recognition means (program) identifies the site of a finger to calculate the coordinates [fingertip coordinates T(Xp,Yq)] corresponding to the tip of the finger. Next, a similar program is used to identify the shape of the fist of the aforementioned hand H (with reference to the portion shaded with solid diagonal lines in FIG. 1C), thereby calculating the coordinates [center of gravity coordinates G(Xm,Yn)] corresponding to the center of gravity of the area distribution of this fist.

During this calculation, Equation (1) to be described below is used for the computation of an X-axis coordinate among the center of gravity coordinates G.

$$\text{Xm among the center of gravity coordinates G} = \text{(the sum of X coordinate values of pixels present inside the shape of the fist)}/\text{(the number of pixels present inside the shape of the fist)} \quad \dots (1)$$

Equation (2) to be described below is used for the computation of a Y-axis coordinate among the center of gravity coordinates G.

$$\text{Yn among the center of gravity coordinates G} = \text{(the sum of Y coordinate values of pixels present inside the shape of the fist)}/\text{(the number of pixels present inside the shape of the fist)} \quad \dots (2)$$

Next, after the fingertip coordinates $T(Xp, Yq)$ and the center of gravity coordinates $G(Xm,Yn)$ of the fist are specified, the step (light projecting step) of projecting the aforementioned light, the step (imaging step) of acquiring the two-dimensional image and the step (coordinate specifying step) of calculating the center of gravity coordinates G of the fist and the fingertip coordinates T are repeated as mentioned above. As shown in FIG. 5A, the distance do between the center of gravity coordinates $G_0$ of the fist of the hand $H_0$ and the fingertip coordinates $T_0$ before the movement and the distance $d_2$ between the center of gravity coordinates $G_2$ of the fist of the hand $H_2$ and the fingertip coordinates $T_2$ after the movement are compared with each other.

A method for comparing distances d between the center of gravity coordinates G of the fist and the fingertip coordinates T with each other will be described in further detail. FIG. 5B is a view illustrating the method for comparing the distances d between the center of gravity coordinates G of the aforementioned fist and the fingertip coordinates T with each other in principle.

In making a determination that the hand H has made an upward or downward motion by comparing the distances d between the center of gravity coordinates G of the fist and the fingertip coordinates T with each other, another condition is set in this example in addition to the setting of the threshold value (lower limit) of the difference between the distances d. As shown in FIG. 5B, this additional condition is that an angle $\theta$ between a line segment A connecting the center of gravity coordinates $G_0$ of the fist of the hand $H_0$ and the fingertip coordinates $T_0$ before the movement and a line segment B connecting the center of gravity coordinates $G_2$ of the fist of the hand $H_2$ and the fingertip coordinates $T_2$ after the movement [which is represented as the absolute value of a difference $(\theta_1 - \theta_2)$ between an angle $\theta_1$ formed by a reference line and the line segment A and an angle $\theta_2$ formed by the same reference line and the line segment B in the figure] is not greater than a predetermined threshold value. This condition is set to prevent the motion of bending a finger and the like from being incorrectly determined to be an upward or downward motion of the aforementioned hand H. In this manner, criteria of determination such that the aforementioned "difference between the distances d" is not less than a set value and that the "difference between the angle $\theta_1$ and the angle $\theta_2$" is not less than a set value are set in the aforementioned motion determination means or motion determination program to thereby prevent the incorrect determination that the motion of bending a finger and the like is recognized as the upward or downward motion of the aforementioned hand H. When the motion of the hand H does not satisfy the two aforementioned conditions at the same time, a determination is made that the motion of the hand is the sliding movement of the hand H (aforementioned first pattern) as mentioned above.

As described above, when the distance between the center of gravity coordinates G of the aforementioned fist and the aforementioned fingertip coordinates T is decreased or increased before and after the measurement, the method for detecting the motion of the input body according to the present invention is capable of making a determination that the motion of the hand H at that time is an upward or downward motion of a finger with respect to the virtual imaging plane P of the aforementioned optical imaging means (camera C).

Also, the input device according to the present invention which uses the method for detecting the motion of the aforementioned input body is capable of detecting the motion of the human hand H in the Z-axis direction, i. e. the three-dimensional motion, from an image analysis by using only the single camera C disposed below or above the aforementioned hand H.

Further, because of the capability of detecting the motion in the Z-axis direction, the aforementioned input device is capable of allocating the motion of the hand H in a horizontal direction (X and Y directions), for example, to a cursor movement manipulation of the display device and the like while allocating the motion in the aforementioned Z-axis direction to a decision (click) manipulation.

Another manipulation method may be employed such that the motion of the hand H in the X-axis (leftward or rightward) direction and in the Z-axis (upward or downward) direction is allocated to the manipulation of moving an object on the display device while the motion thereof in the Y-axis (forward or backward) direction is allocated to the manipulation of expanding and contracting the aforementioned object. In this manner, the input device according to the present invention achieves the manipulation corresponding to essential three-dimensional (three axes of X, Y and Z) information for three-dimensional (3D) video pictures and the like. Also, the input device according to the present invention has the advantage of achieving more intuitive manipulations by approaching the same manipulation environment as in a real three-dimensional space.

As mentioned above, the method for detecting the motion of the input body according to the present invention is capable of similarly detecting the three-dimensional motion of the human hand H even when the aforementioned camera unit is disposed in an inclined attitude below the input body (hand H) (FIG. 6) or may be disposed above the aforementioned hand H (FIG. 7) . Specifically, when the camera unit is disposed in an inclined attitude below the hand H as shown in FIG. 6, this optical imaging means (camera C) is capable of recognizing and determining the upward or downward motion (motion in the Z direction) of the hand H with respect to a virtual imaging plane P', as in the case where the camera unit is disposed immediately under the aforementioned hand H (FIG. 4).

Also, when the camera unit is disposed above the hand H as shown in FIG. 7, the optical imaging means (camera C) is similarly capable of recognizing and determining the upward or downward motion (motion in the Z direction) of the hand H with respect to a virtual imaging plane P". Thus, the aforementioned camera unit may be disposed in any position where the hand H is not hidden behind an arm and other obstacles to imaging into a shadowed area. It should be noted that the camera C and the light sources L which constitute the camera unit are disposed on the same side above or below the input body (hand H) because the optical imaging means according to the present invention is designed to image and recognize reflected light from the aforementioned hand H.

Although a specific form in the present invention has been described in the aforementioned examples, the aforementioned examples should be considered as merely illustrative and not restrictive. It is contemplated that various modifications evident to those skilled in the art could be made without departing from the scope of the present invention.

The method for detecting the motion of the input body, and the input device using the same according to the present invention are capable of detecting the three-dimensional motion of a human hand by using the single camera without using a plurality of cameras. This achieves more intuitive manipulations for three-dimensional (3D) video pictures and the like as in a real three-dimensional space.

REFERENCE SIGNS LIST

H    Hand
C    Camera
L    Light sources
P    Virtual imaging plane
G    Center of gravity coordinates of fist
T    Fingertip coordinates

Claims

1. A method for detecting three-dimensional motion of a hand used for input of coordinates in an input device by means of a single optical imaging means, the method comprising:

   projecting light from a light source disposed above or below a hand including a fist, toward the hand;
   acquiring a reflection of the light from the hand as a two-dimensional image on a virtual imaging plane, using an optical imaging means disposed on a same side of the hand as the light source;

allocating coordinates on two axes orthogonal to each other to the two-dimensional image to recognize and extract a shape of the fist and a position of a fingertip protruding from the fist, from the two-dimensional image, thereafter calculating coordinates of the center of gravity of an area distribution of the fist and the coordinates of the fingertip by computation;

repeating the projecting of the light, the acquiring of the two-dimensional image and the calculating of the center of gravity coordinates of the fist and the fingertip coordinates;

comparing distances between the center of gravity coordinates of the fist and the fingertip coordinates before and after the repetition, thereby making a determination that the hand including the fist, has made a sliding movement along the virtual imaging plane when there is no change between the distances between the center of gravity coordinates of the fist and the fingertip coordinates before and after the repetition, and making a determination that the fingertip has pivoted upwardly or downwardly about the wrist of the hand or an elbow when there is a change between the distances between the center of gravity coordinates of the fist and the fingertip coordinates before and after the repetition.

2. An input device comprising:

a light source disposed above or below a hand including a fist used as an input body for the device;

an optical imaging means disposed on the same side of the hand as the light source;

a control means for controlling the light source and the optical imaging means;

a shape recognition means for acquiring a reflection of light projected from the light source toward the hand as a two-dimensional image, to calculate coordinates corresponding to a center of gravity of an area distribution of the fist and coordinates corresponding to a position of a fingertip protruding from the fist, from the two-dimensional image; and

a motion determination means for comparing distances between the center of gravity coordinates of the fist and the fingertip coordinates before and after a predetermined time interval to make a determination that a motion of the hand is an upward or downward motion of a finger with respect to a virtual imaging plane of the optical imaging means, when there is a decrease or an increase between the distances before and after the time interval.

# FIG.1A

# FIG.1B

# FIG.1C

# FIG.2

# FIG.3A

# FIG.3B

# FIG.4

# FIG.5A

# FIG.5B

# FIG.6

## FIG.7

EP 2 755 115 A1

FIG.8

P2

H

C2

Y
X

P1

Z
Y

C1

18

## INTERNATIONAL SEARCH REPORT

| International application No. |
| --- |
| PCT/JP2012/071456 |

A. CLASSIFICATION OF SUBJECT MATTER

*G06F3/033*(2006.01)i, *G06F3/01*(2006.01)i

According to International Patent Classification (IPC) or to both national classification and IPC

B. FIELDS SEARCHED

Minimum documentation searched (classification system followed by classification symbols)

G06F3/033, G06F3/01

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2006-99749 A (Matsushita Electric Works, Ltd.), 13 April 2006 (13.04.2006), paragraphs [0002], [0024], [0055] to [0059]; fig. 4 & JP 2011-60337 A | 1,2 |
| A | JP 11-134089 A (Takenaka Corp.), 21 May 1999 (21.05.1999), entire text; all drawings & US 6434255 B1 & EP 913790 A1 & DE 69817498 D & DE 69817498 T | 1,2 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 November, 2012 (19.11.12) | 27 November, 2012 (27.11.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

International application No.

PCT/JP2012/071456

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-171476 A  (Keio University, Mitsubishi Fuso Truck and Bus Corp.), 17 June 2004 (17.06.2004), paragraphs [0018] to [0029]; fig. 5 (Family: none) | 1,2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0953914 A

- JP HEI1123262 A